# EUROPÄISCHE PATENTANMELDUNG

(11) **EP 1 798 246 A1**
(43) Veröffentlichungstag der Anmeldung: **20.06.2007**
(21) Anmeldenummer: 05027441.4
(22) Anmeldetag: 15.12.2005
(51) Int. Cl.: C08F 214/06, C08F 2/22

(54) **Verfahren zur Herstellung von wässrigen Vinylchlorid-(Meth)Acrylat-Copolymerisaten und deren Verwendung in wässriger Form**

(71) Anmelder: VESTOLIT GmbH & Co. KG, 45772 Marl (DE)
(72) Erfinder: Brizzolara, Davide, 45701 Herten (DE)
(74) Vertreter: polypatent

(57) **Zusammenfassung**

Gegenstand der Erfindung ist ein Verfahren zur Herstellung wässriger Emulsionspolymerisate von Vinylchlorid-(Meth)Acrylat-Copolymeren in einem semikontinuierlichen Prozess und deren Verwendung in wässriger Form, das dadurch gekennzeichnet ist, dass 0,5 Gew-% bis 5 Gew-% Acrylamid oder Metacrylamid bezogen auf die Menge an Gesamtmonomer copolymerisiert werden und 0,3 bis 3 Gew-% eines Natrium-, Kalium- oder Ammoniumsalzes eines C₆-C₁₈-Alkyl-Disulphonsäure-Diphenyloxids zugegeben werden.

## Beschreibung

Inhalt der Erfindung ist ein Verfahren zur Herstellung wässriger Emulsionspolymerisate von Vinylchlorid-(Meth)Acrylat-Copolymeren in einem semikontinuierlichen Prozess und deren Verwendung in wässriger Form, das dadurch gekennzeichnet ist, dass 0,5 Gew-% bis 5 Gew-% Acrylamid oder Metacrylamid bezogen auf die Menge an Gesamtmonomer copolymerisiert werden und 0,3 bis 3 Gew-% eines Natrium-, Kalium- oder Ammoniumsalzes eines C₆-C₁₈-Alkyl-Disulphonsäure-Diphenyloxids zugegeben werden. Die Dispersionen zeichnen sich durch hohe Stabilität und gute Filmeigenschaften aus.

Die vorliegende Erfindung betrifft wässrige Vinylchlorid-(Meth)Acrylat-Dispersionen, die 0,5 Gew-% bis 5 Gew-% bezogen auf 100 Gew-% aller Monomere Acrylamid oder Methacrylamid und 0,3 Gew-% bis 3 Gew-% eines Disulfonsäure C₆-C₁₈-Alkyl-Diphenyloxids enthalten. Sie sind aufgrund ihrer guten Elektrolyt- und Scherstabilität der Dispersion und guter Wasserfestigkeit und Zugfestigkeit der daraus hergestellten Filme besonders geeignete Bindemittel für wässrige Zubereitungen, wie bspw. Dispersionsfarben, Papierstreichfarben, Grundierungen, Textilkleber, Haftkleber, Markierungsfarben, Holzfarben, Fußbodenfarben, Korrosionsschutzfarben, Betonfarben, etc.

Copolymere des Vinylchlorids mit (Meth)Acrylaten sind seit den 30iger Jahren des letzten Jahrhunderts bekannt (H. Kainer, Polyvinylchlorid und Vinylchlorid-Mischpolymerisate, Chemie, Physik und Technologie der Kunststoffe in Einzeldarstellung, Springer-Verlag, 1965, Berlin, Heidelberg, New York). In lösemittelhaltigen Lackformulierungen haben sich Vinylchlorid-(Meth)Acrylat-Copolymere, die unter Umständen Comonomere mit Hydroxyl-, Carboxyl- oder Amid-Funktion enthalten, bewährt (Pourahmady, Naser; Bak, Philip I. Polymeric Science and Engineering (1990), 63, 427-31). In wässriger Form haben diese Copolymere nur geringe Bedeutung erlangt.

Die DE 1295817 ist eine der wenigen Veröffentlichungen, die die Zubereitung von Vinylchlorid-(Meth)Acrylat-Dispersionen mit guter Elektrolyt- und Scherstabilität behandelt. Jedoch allein die sehr hohen Emulgatormengen von mindestens 3 Gew-% machen die dort beschriebenen Dispersionen für viele Anwendungen zu wasserempfindlich.

In wässriger Form haben vor allem Copolymere des Vinylchlorids mit Ethylen und/ oder Vinylidenchlorid, die neben funktionellen Comonomeren eventuell noch einige Gew-% Vinylacetat oder (Meth)Acrylat enthalten, größere wirtschaftliche Bedeutung erlagt (H. Kittel - Lehrbuch der Lacke und Beschichtungen - 2. Auflage, 1998, Hirzel-Verlag, Stuttgart). Das günstige Preis-Leistungsverhältnis ist ein wesentlicher Grund für die große Verbreitung dieser Art von Dispersionen.

Die gesetzlichen Rahmenbedingungen zur Einschränkung von Emissionen durch Lösemittel führt dazu, dass immer mehr Produkte auf Wasserbasis umgestellt werden. Aufgrund der unterschiedlichen Filmbildung von gelösten Polymeren und wässrigen Polymerdispersionen haben Lösemittelsysteme oft bessere Filmeigenschaften. Wässrige Vinylchlorid-(Meth)Acrylat-Dispersionen sind aufgrund ihrer guten Filmeigenschaften sehr leistungsfähige Bindemittel, die in vielen Anwendungen eine gute Alternative zu Lösemittelsystemen sein können. Dazu ist es aber notwendig ein Verfahren bereitzustellen, das die Herstellung von Dispersionen mit ausreichender Verarbeitungsstabilität in wässriger Form ermöglicht. Dabei ist für viele Anwendungen eine wichtige Randbedingung, dass nicht zu hohe Mengen an ionischen und nichtionischen Emulgatoren, Schutzkolloiden, wie bspw. Polyvinylalkohol oder Cellulosether und polaren Comonomeren notwendig sind, die aufgrund der Polarität die Wasseraufnahme und das Weißanlaufen der Filme erhöhen.

Aufgabe der vorliegenden Erfindung war es daher, eine stabile Vinylchlorid-(Meth)Acrylat-Dispersion bereitzustellen, die sich durch hohe Stabilität und gute Filmeigenschaften auszeichnet.

Die Aufgabe wird gelöst durch ein Verfahren zur Herstellung wässriger Emulsionspolymerisate von Vinylchlorid-(Meth)Acrylat-Copolymeren in einem semikontinuierlichen Prozess, das dadurch gekennzeichnet ist, dass als Comonomer 0,5 Gew-% bis 5 Gew-% Acrylamid oder Methacrylamid bezogen auf die Menge an Gesamtmonomer copolymerisiert werden und 0,3 bis 3 Gew-% eines Natrium-, Kalium- oder Ammoniumsalzes eines C₆-C₁₈-Alkyl-Disulfonsäure-Diphenyloxids zugegeben werden.

Die vorliegende Erfindung betrifft die Herstellung wässriger Vinylchlorid-(Meth)Acrylat-Dispersionen und deren Verwendung. Die Scherstabilität und Elektrolytstabilität von Vinylchlorid-(Meth)Acrylat-Dispersionen lässt sich erhöhen, wenn bei der Herstellung 0,5 bis 5 Gew-% Acrylamid oder Methacrylamid in Kombination mit 0,3 Gew-% bis 3 Gew-% des Natrium-, Kalium- oder Ammoniumsalzes eines C₆-C₁₈-Alkyl-Disulfonsäure-Diphenyloxids verwendet werden.

Die wässrige Emulsionspolymerisation wird in einem semikontinuierlichen Prozess hergestellt. Dabei kann bis zu 10 Gew-% der gesamten Monomermenge vorgelegt und der Hauptteil dann zudosiert werden. Die Monomere werden in 120 min bis 500 min dosiert. Ein Teil (bis zu 20%) des Emulgators wird zur Steuerung der gewünschten Zielteilchengröße vorgelegt und der restliche Teil wird gleichzeitig mit den Monomeren zudosiert. Der Initiator kann entweder zum Teil vorgelegt werden oder auch nur vollständig zudosiert werden. Der Umsatz beträgt nach beendeter Polymerisation 90 % bis 100 % bei einem Feststoffgehalt von 30 % bis 65 %.

Die Hauptmonomere zur Herstellung der Copolymere nach dem erfindungsgemäßen Verfahren sind bevorzugt Vinylchlorid, (Meth)acrylate und Acrylate, wie bspw. Methylmethacrylat, Ethylmethacrylat, Propylmethacrylat, Butylmethacrylat, Ethylhexylmethacrylat, Methylacrylat, Ethylacrylat, Propylacrylat, n-Butylacrylat, t-Butylacrylat, iso-Butylacrylat, Ethylhexylacrylat, etc., ohne auf diese beschränkt zu sein. Durch das Verhältnis von harten und weichen Monomeren wird bevorzugt eine Glasübergangstemperatur von -30°C bis +70°C eingestellt. Der Anteil an Vinylchlorid im Copolymer liegt zwischen 5 Gew-% und 95 Gew-% bezogen auf 100 Gew-% der Monomere.

Als Comonomer eignen sich z. B. Acrylamid oder Methacrylamid. Nach dem erfindungsgemäßen Verfahren werden 0,5 Gew-% bis 5 Gew-% bezogen auf 100 Gew-% der Monomere Acrylamid oder Methacrylamid polymerisiert.

Es ist gegebenenfalls möglich, noch ein weiteres Comonomer mit einer oder zwei Carboxylgruppen, wie Bspw. Acrylsäure, Methacrylsäure, Maleinsäureanhydrid, Itakonsäure oder Fumarsäure in einer Menge von 0,1 Gew-% bis 0,5 Gew-% bezogen auf 100 Gew-% der Monomere in die Polymerisationsreaktion einzubringen.

Zur Herstellung von Dispersionen mit hoher Scherstabilität, Elektrolytstabilität und guten Filmeigenschaften haben sich für das erfindungsgemäße Verfahren Natrium-, Kalium- oder Ammoniumsalze von verzweigten und unverzweigten C₆-C₁₈-Alkyl-Disulfonsäure-Diphenyloxiden als ionische Emulgatoren bewährt. Diese Emulgatoren werden unter dem Handelsnamen Dowfax von der Firma DOW vertrieben und haben sich als sehr gute ionische Emulgatoren mit einer gewissen Elektrolytstabilität in den letzten Jahrzehnten etabliert (J.W. Vanderhoff et al., J. Appl. Polym. Sci., Vol. 41, 1549-1568 (1990)).

Ammonium-, Natrium- und Kaliumsalze von Peroxodisulfaten können als Initiatoren allein oder in Kombination mit organischen Peroxiden oder Wasserstoffperoxid oder Redoxsystemen, wie bspw. Formaldehydsulfoxylat oder Ascorbinsäure verwendet werden.

Der pH-Wert während der Polymerisation und des fertigen Produkts kann durch Natronlauge, Ammoniak, Triethanolamin, Natriumcarbonat, Kaliumphosphat, etc. eingestellt werden. Während der Polymerisation wird bevorzugt ein pH-Wert von 3 bis 6 eingehalten. Das Endprodukt wir auf einen pH-Wert von 7 bis 9 eingestellt.

Zur Steuerung des Molekulargewichts können Verbindungen mit hoher Radikalübertragungsrate, wie bspw. t-Dodecylmercaptan, n-Dodecylmercaptan, Mercaptoethanol, Mercaptopropionsäure, Triethanolamin, etc. verwendet werden.

Die Polymerisationstemperatur liegt bei dem erfindungsgemäßen Verfahren im Bereich zwischen 20°C und 120°C, bevorzugt zwischen 40°C und 90°C.

Die Teilchengröße der Polymere in der fertig polymerisierten Dispersion liegt zwischen 25 nm und 250 nm, bevorzugt zwischen 110 nm und 180 nm.

Die folgenden Beispiele dienen zur Erläuterung des erfindungsgemäßen Verfahrens.

Verfahren zur Bestimmung der Dispersionseigenschaften:
Glasübergangstemperatur:
   Die Glasübergangstemperatur wurde durch Differenzialthermoanalyse mit Hilfe eines Geräts der Fa. Mettler Toledo bestimmt.
Elektrolytstabilität:
   100 g Dispersion wurden zu einer 10 %igen Calciumchlorid-Lösung gegeben und das Aussehen sofort und nach einer Stunde beurteilt. OK=keine Veränderung, - = Stippen oder Koagulat.
Scherstabilität:
   80 g Dispersion wurden in einem Behälter geeigneter Größe mit einem Ultraturrax bei 4000 Upm geschert. Die Dispersion ist scherstabil, wenn Sie nach 15 min nicht koaguliert ist. Je kürzer die Scherbelastung, desto geringer ist die Scherstabilität.
Wasseraufnahme:
   Es wurden in einer Petri-Schale Filme gegossen, die nach anschließender Trocknung für 24h in Wasser gelagert wurden. Durch die Gewichtsdifferenz vor und nach Wasserlagerung wurde die Wasseraufnahme bestimmt.
Transparenz/ "Haze":
   Es wird die Transmission (Transparenz) und Großwinkelstreuung (Haze, Trübung) eines Films vor und nach Wasserlagerung für eine vorbestimmte Zeit gemessen, als Maß für das Weißanlaufen durch Wassereinwirkung.
Reißfestigkeit/ Reißdehung:
   Die Reißfestigkeit und Reißdehnung wurde mit einer Eriksen 4642 mit einem Kraftaufnehmer 709 gemessen.

### Beispiel 1

In einem 101 Druckautoklaven, der mit Mantelkühler und einem Rührwerk ausgestattet war, wurden 1949 g Wasser, 184,2 g Vinylchlorid, 7,37 g Dowfax 2A1 (verzweigtes C-12 Natrium-Disulphonsäure-Diphenyloxid) (15% ige Lösung) und 1,11 g Ascorbinsäure vorgelegt und auf 75°C erwärmt.. Bei Erreichen einer Konstanz der Zieltemperatur wurde mit der Dosierung von 245,6 g einer 3 %igen Ammoniumperoxodisulfatlösung begonnen, welche innerhalb von 355 min erfolgte. Nach einigen Minuten wurde mit der Dosierung von 1031,9 g Dowfax 2A1 als 5 %ige Lösung, gemischt mit 14,74 g Ammoniak (25%ige Lösung), begonnen, welche innerhalb von 330 min erfolgte. Mit Auftreten einer deutlichen Wärmetönung (die Manteltemperatur des Autoklaven sinkt unter die Innentemperatur, weil die exotherme Polymerisation Wärme freisetzt) wurde mit der Dosierung von 368,4 g Acrylamid als 10 %ige Lösung, 1584 g Ethylhexylacrylat und 1879,0 g Vinylchlorid begonnen, welche innerhalb von 300 min erfolgte. Nach Beendigung aller genannten Zugaben wurden über eine Druckschleuse 29,47 g einer 25 %igen Ammoniaklösung auf einmal zugegeben. Die Temperatur wurde noch für weitere 2 h gehalten und dann auf Raumtemperatur gekühlt.

Es wurde eine Dispersion mit einem Feststoffgehalt von 53,1 %, einer Teilchengröße von 163 nm und einem pH-Wert von 9,1 erhalten. Der Ansatz wurde mit Wasser auf einen Festkörpergehalt von 40 Gew-% bis 45 Gew-% verdünnt und über Nacht in einem Abzug bei 55°C gerührt. Anschließend wurde der Ansatz über ein 125 µm Sieb gegeben, der pH-Wert auf 7,5 eingestellt und die Endwerte erneut bestimmt. Der Feststoffgehalt lag bei 50,4 % und die Oberflächenspannung bei 59,7 mN/m. Ein hergestellter 150 µm dicker Film war klar und frei von Stippen. Die Glasübergangstemperatur lag bei 18°C.

### Beispiel 2

Der Ansatz wurde analog Beispiel 1 hergestellt, es wurden jedoch 552,6 g einer 10%igen Acrylamid-Lösung, 1842 g Vinylchlorid und 1603 g Acrylamid im Zulauf zugegeben. Die fertige Dispersion hatte nach dem Entladen aus dem Polymerisationsreaktor einen Feststoffgehalt von 53,4 %, eine Oberflächenspannung von 61,5 mN/m und einen pH-Wert von 9,6. Der Ansatz wurde wie oben verdünnt und über Nacht in einem Abzug bei 55°C gerührt. Anschließend wurde der pH-Wert auf 7,8 eingestellt. Der Feststoffgehalt lag bei 49,7 % und die Oberflächenspannung bei 60,3 mN/m. Ein 150µm dicker Film war klar und frei von Stippen. Die Glasübergangstemperatur lag bei 16°C.

### Beispiel 3

Der Ansatz wurde analog Beispiel 1 hergestellt, aber es wurden 736,9 g einer 10 %igen Acrylamid-Lösung und 1584 g Ethylhexylacrylat eingesetzt.
Der Feststoffgehalt der fertigen Dispersion betrug 53,1 %, die Oberflächenspannung 63,7 mN/m und der pH-Wert 9,4. Der Ansatz wurde verdünnt und über Nacht in einem Abzug bei 55° gerührt. Anschließend wurde der pH-Wert auf 7,6 eingestellt. Der Feststoffgehalt der Dispersion betrug dann 50,3 und die Oberflächenspannung 60,7 mN/m. Ein 150 µm dicker Film war klar und frei von Stippen. Die Glasübergangstemperatur lag bei 16°C.

### Vergleichsbeispiel 1

Der Ansatz wurde analog Beispiel 2 hergestellt, aber es wurde anstelle von Acrylamid die gleiche Menge Acrylsäure zugegeben.
Es wurde eine Dispersion mit einem Feststoffgehalt von 53,1, einem pH-Wert 5,1 und einer Oberflächenspannung von 59,6 mN/m erhalten. Der Ansatz wurde über Nacht in einem Eimer bei 55°C gerührt und anschließend der pH-Wert auf 7,5 eingestellt. Der Feststoffgehalt betrug dann 50,2 % und die Oberflächenspannung 56.7 mN/m. Ein 150 µm dicker Film war klar und frei von Stippen. Die Glasübergangstemperatur betrug 18°C.

### Vergleichsbeispiel 2

Der Ansatz wurde analog Beispiel 1 hergestellt, aber es wurde anstelle von Dowfax 2A1 die gleiche Menge an Marlon A315 (Natrium-Alkyarylsulfonat) verwendet. Das Copolymer enthielt etwas mehr Ethylhexylacrylat (1695 g) und etwas weniger Vinylchlorid (1952,2 g). Es wurde eine Dispersion mit einem Feststoffgehalt von 54,8 %, einer Oberflächenspannung von 56,0 mN/m und einem pH-Wert von 8,4 erhalten. Der Ansatz wurde über Nacht in einem Abzug bei 55°C gerührt und anschließend auf einen pH-Wert von 5,8 eingestellt. Der Feststoffgehalt betrug dann 50,2 % und die Oberflächenspannung 56,5 mN/m. Ein 150 µm dicker Film war leicht trüb und etwas stippig. Die Glasübergangstemperatur betrug 11°C.

In der folgenden Tabelle ist die Wasseraufnahme, die Transparenz, der Haze, die Scherstabilität und die CaCl₂-Stabilität der erfindungsgemäßen Dispersionen und der Vergleichsbeispiele aufgeführt. Zusätzlich wurde eine Standard Reinacrylat-Dispersion mit einer Glasübergangstemperatur von 16 °C und eine Vinylchlorid-Ethylen-Vinylacetat-Dispersion mit einer Glasübergangstemperatur von 20° getestet.

**Tabelle: Dispersions- und Filmeigenschaften**

| | Tg (°C) | CaCl₂-Stabilität Omin/60min | Scher Stabilität* (*) | Wasser aufnahme 24h (%) | Haze sofort/ 24h (%) | Tranparenz sofort/ 24h (%) | Zugfesigkeit (N/m²) | Reißdehnung (%) |
|---|---|---|---|---|---|---|---|---|
| Beispiel 1 | 18 | OK/OK | 15 min | 5,42 | 3,3/73,6 | 91,8/63,8 | 13,1 | 220 |
| Beispiel 2 | 16 | OK/OK | 15 min | 5,94 | 3,0/69,0 | 91,9/62,9 | 12,5 | 243 |
| Beispiel 3 | 16 | OK/OK | 15 min | 6,17 | 3,1/66,7 | 91,9/59,5 | 12,8 | 260 |
| Vergl.beispiel 1 | 18 | -/- | 2 min | 10,6 | 13,4/ 90,9 | 89,9/55,6 | 6,5 | 310 |
| Verg.beispiel 2 | 11 | -/- | 0 min | 7,3 | 8,22/90,2 | 90,4/59,1 | 9,8 | 409 |
| Reinacrylat | 16 | OK/OK | 2 min | 5,9 | 12,4/97,4 | 91,5/69,8 | 9,7 | 210 |
| VC-E-VAc | 20 | OK/OK | 15 min | 11,1 | 47,7/90,1 | 89,3/45,7 | 8,3 | 320 |

Die Tabelle zeigt, dass die erfindungsgemäßen Dispersionen eine hohe Stabilität und gute Filmeigenschaften aufweisen. Das Vergleichsbeispiel mit Acrylsäure anstelle von Acrylamid als Comonomer zeigt eine deutliche schlechtere Elektrolyt- und Scherstabilität, sowie eine höhere Wasseraufnahme und eine schlechtere Zugfestigkeit.

Beim Vergleichsbeispiel 2, das Acrylamid als Comonomer enthält, aber anstelle eines Alkyl-Disulfonsäure-Diphenyloxids ein Alkylarylsulfonat enthält, sind die Filmeigenschaften auf ähnlichem Niveau wie bei den erfindungsgemäßen Dispersionen 1 bis 3. Allerdings ist die Elektrolytstabilität und Scherstabilität sehr viel niedriger als bei den erfindungsgemäßen Dispersionen.

Beim Vergleich mit den Reinacrylat- und Vinylchlorid-Ethylen-Vinylacetat-Dispersionen (VC-E-VAc) fallen vor allem die höheren Zugwerte der erfindungsgemäßen Dispersionen auf.

Die erfindungsgemäßen Dispersionen verfügen über eine hohe Scherstabilität und Elektrolytstabilität, und die daraus hergestellten Filme verfügen über eine hohe Wasserfestigkeit und Reißfestigkeit.

## Patentansprüche

1. Verfahren zur Herstellung wässriger Emulsionspolymerisate von Vinylchlorid-(Meth)Acrylat-Copolymeren in einem semikontinuierlichen Prozess, das **dadurch gekennzeichnet ist, dass** als Comonomer 0,5 Gew-% bis 5 Gew-% Acrylamid oder Methacrylamid bezogen auf die Menge an Gesamtmonomer copolymerisiert werden und 0,3 bis 3 Gew-% eines Natrium-, Kalium- oder Ammoniumsalzes eines C₆-C₁₈-Alkyl-Disulfonsäure-Diphenyloxids zugegeben werden.

2. Verfahren nach Anspruch 1, **dadurch gekennzeichnet, dass** Vinylchlorid als hart machendes Monomer in Verbindung mit einem weichmachenden Monomer eingesetzt wird.

3. Verfahren nach einem der Ansprüche 1 und 2, **dadurch gekennzeichnet, dass** Vinylchlorid in einer Menge von 5 Gew-% bis 30 Gew-% bezogen auf 100 Gew-% der Monomere eingesetzt wird.

4. Verfahren nach Anspruch 1 oder 2, **dadurch gekennzeichnet, dass** Vinylchlorid in einer Menge von 31 Gew-% bis 60 Gew-% bezogen auf 100 Gew-% der Monomere eingesetzt wird.

5. Verfahren nach Anspruch 1 oder 2, **dadurch gekennzeichnet, dass** Vinylchlorid in einer Menge von 61 Gew-% bis 95 Gew-% bezogen auf 100 Gew-% der Monomere eingesetzt wird.

6. Verfahren nach einem der Ansprüche 1 bis 5, **dadurch gekennzeichnet, dass** als Acrylate oder Methacrylate Methylacrylat, Methylmethacrylat, Ethylacrylat, Ethylmethacrylat, Propylacrylat, Propylmethacrylat, n-Butylacrylat, i-Butylacrylat, t-Butylacrylat, Butylmethacrylat, 2-Ethylhexylacrylat, 2-Ethylhexylmethacrylat eingesetzt werden.

7. Verfahren nach einem der Ansprüche 1 bis 6, **dadurch gekennzeichnet, dass** als Comonomer Acrylamid oder Methacrylamid in einer Menge von 0,5 Gew-% bis 3 Gew-% bezogen auf 100 Gew-% der Monomere eingesetzt werden.

8. Verfahren nach einem der Ansprüche 1 bis 7, dass in einer Menge von 0,1 Gew-% bis 0,5 Gew-% bezogen auf 100 Gew-% der Monomere Acrylsäure, Methacrylsäure, Maleinsäureanhydrid, Itakonsäure oder Fumarsäure in die Polymerisation eingesetzt werden.

9. Verfahren nach einem der Ansprüche 1 bis 8, **dadurch gekennzeichnet, dass** der pH-Wert während der Polymerisation zwischen 3 und 6 liegt und der pH-Wert der fertigen Dispersion auf 7 bis 9 eingestellt wird.

10. Verfahren nach einem der Ansprüche 1 bis 9, **dadurch gekennzeichnet, dass** als Initiatoren Natrium-, Kalium oder Ammoniumperoxodisulfat allein oder in Kombination mit Wasserstoffperoxid oder organischen Peroxiden und gegebenenfalls mit Unterstützung von Reduktionsmitteln, wie bspw. Ascorbinsäure, Formaldehydsulfoxylat, Zitronensäure verwendet werden.

11. Verfahren nach einem der Ansprüche 1 bis 10, **dadurch gekennzeichnet, dass** in einer semikontinuierlichen Verfahrensweise in wässriger Emulsion polymerisiert wird.

12. Dispersion, hergestellt nach einem Verfahren gemäß einem der Ansprüche 1 bis 11.

13. Verwendung der Dispersion gemäß Anspruch 12 in wässriger Form zur Herstellung von Klebstoffzusammensetzungen, Spachtelmassen, Kunststoffputzen, Dispersionsfarben, Dispersionslacken, Grundierungen, Papierstreichfarben, Teppichrückenbeschichtungen, Handschuhen, Fußbodenfarben, Markierungsfarben, Korrosionsschutzfarben, Grundierungen, Betonfarben oder ähnlichem.
